# EUROPEAN PATENT APPLICATION

(11) **EP 1 193 970 A2**
(43) Date of publication of application: **03.04.2002**
(21) Application number: 01308143.5
(22) Date of filing: 25.09.2001
(51) Int. Cl.: H04N 5/445

(54) **Improvements to electronic programme guide**

(30) Priority: 30.09.2000 GB 0023993
(71) Applicant: Pace Micro Technology PLC, Shipley, West Yorkshire BD18 3LF (GB)
(72) Inventor: Whitehead, Matthew, Oxspring, Sheffield, S36 8ZW (GB)
(74) Representative: Wood, Graham

(57) **Abstract**

The invention to which this application relates is to improvements in electronic programme guides (EPG) which are service provided, in digital broadcast data television systems, to users of the system to indicate to the user the programmes available for selection at the instant of viewing or in the future. The invention provides additional useful and practical information relating to a user selected programme in the form of video and/or audio and/or auxiliary information via an on-screen display.

## Description

The invention to which this application relates is to improvements in electronic programme guides which are a service provided, in digital broadcast data television systems, to users of the system, to indicate to the user the available programmes at the instant of viewing or in the future. The invention provides an improvement to this form of guide which adds to the information provided to the user.

Conventionally, if a viewer wishes to be aware of a range of programmes which are available at a particular time or in the future, they refer to printed schedules of television programmes which typically appear in newspapers, magazines and the like. In addition to providing the programme title and times and channels of transmission, the printed schedules also typically provide a brief written description of the subject matter of the television programme and, furthermore, certain programmes may be selected for a particular written description.

While this conventional approach is more than sufficient for television systems which have perhaps 2, 3, 4 or 5 channels available for viewing at one time, the proliferation of channels which are now available and which has largely been made possible by the use of digital data transmission technology, means that most printed publications are no longer able to provide the space required for all channel programme schedules to be printed.

In response to this, it is now possible to obtain, via an on-screen display, a schedule of television programming at the instant of viewing or in the future and said electronic schedule is known as an electronic programme guide. This guide is typically generated by a broadcast data receiver which receives data, including video, audio and auxiliary data from a broadcaser at a remote location. The broadcast data receiver can then process the data to generate video and audio via, for example, a television set and also an electronic guide from auxiliary data received. Upon user demand, typically via a remote control device, the electronic programme guide can be generated on screen. The guide typically includes a grid in which a number of cells are arranged with respect to a time bar and a list of channels. Each cell represents a particular television programme with the title of that programme being entered in the cell. Thus, by reviewing the grid over a number of display pages, the user is able to identify programmes for each particular channel and to view all of the available channel programmes, if they require.

An additional feature of an electronic programme guide is that the user may select to obtain further information relating to a particular programme, typically by pressing a key on the remote control device which is indicated by the letter "I" for information. Upon depression of the key, the user will be able to view a window display generated by the receiver on the screen. The display window typically includes text that, with the text relating to the subject matter of the particular selected programme. Thus it will be appreciated that the use of the information key is used to provide the information relating to a particular programme which would typically be provided in the conventional printed television programme schedule. However, while this information is undoubtedly welcomed by the user to provide some form of indication of the subject matter of a programme, as it is relatively short and brief, the information may not fully provide the required information for the user to allow them to decide whether or not they wish to watch the programme which, in turn, leads to the user having to select a programme and view the same for a period of time before deciding whether it is in fact of interest to them.

The aim of the present invention is to provide a means whereby useful and practical information relating to a selected programme can be provided to a user via an on-screen display.

In a first aspect of the invention there is provided a television system, said system comprising a broadcast data receiver for receiving data which is broadcast from a remote location and which includes video, audio and auxiliary data, processing said data to generate video, audio and auxiliary services via an on-screen display and speakers connected with the broadcast data receiver and from said auxiliary data, an electronic programme guide can be generated on screen for user selection of programmes for viewing at that instant or in the future and wherein there is provided a memory means in which video and/or audio data can be stored for subsequent retrieval and display upon the selection of a programme from the electronic programme guide and to which a portion of said stored video and/or audio data relates.

Typically the retrieval and display of the video or audio data from the storage means is in response to a user requesting further information with respect to a particular programme displayed on an electronic programme guide (EPG). Thus, in addition, or alternatively to, the conventional text information being displayed, a video and/or audio clip or trailer for that particular programme is generated from the data retrieved from storage and shown to the user. The provision of this clip or trailer thus provides the user with all of the information which they need to be able to decide whether or not they wish to watch the programme. It is envisaged that the clip or trailer will be equivalent to those which are used to advertise films on television and/or in cinemas and/or are similar to those clips or trailers which are occasionally positioned at the front of a particular programme prior to the actual programme starting and are provided to illustrate to the user what they should expect to see if they subsequently decide to view the programme. If having viewed the clip or trailer which is generated in accordance with the invention, the user wishes to watch the programme, then they may do so by selecting the programme automatically or in the future.

It is envisaged that the storage means can be any appropriate storage means and in one embodiment may be in the form of a hard disc memory provided as part of the broadcast data receiver. In this embodiment, the video and/or audio data which will be used to generate the clips or trailers in accordance with the invention, can be downloaded at designated time intervals, say once per day, and preferably when the broadcast data receiver is not likely to be in use, such as during the night. In this way, sufficient video and audio data to generate clips or trailers for each, or a selected number of, programmes in the following time period, prior to the next downloading of data, can be held in the storage means. In addition to the video and/or audio data, the data includes identification data so that upon the user requesting information for a particular programme the appropriate portion of the data in the storage means can be identified and retrieved for processing by the broadcast data receiver.

In one embodiment, the video data which is transmitted for the generation of clips and trailers may be of a lower resolution and/or the clips or trailers may be shown in a reduced screen area of the display screen rather than over the full screen. Either or both of these arrangements may be used to reduce the level of data which is required to be stored.

In one embodiment, and in addition to the video and/or audio clip or trailer which is generated, further information may be generated via the data stored in the storage means such as for example web page information, profile information on actors appearing in the programme which is selected, and/or details of further programmes that may also be of interest to the user.

A specific embodiment of the invention is now described with reference to the accompanying drawings, wherein:-
Figure 1 illustrates a conventional display for information relating to a particular programme; and
Figure 2 illustrates an information display which can be generated in accordance with the present invention for the same programme.

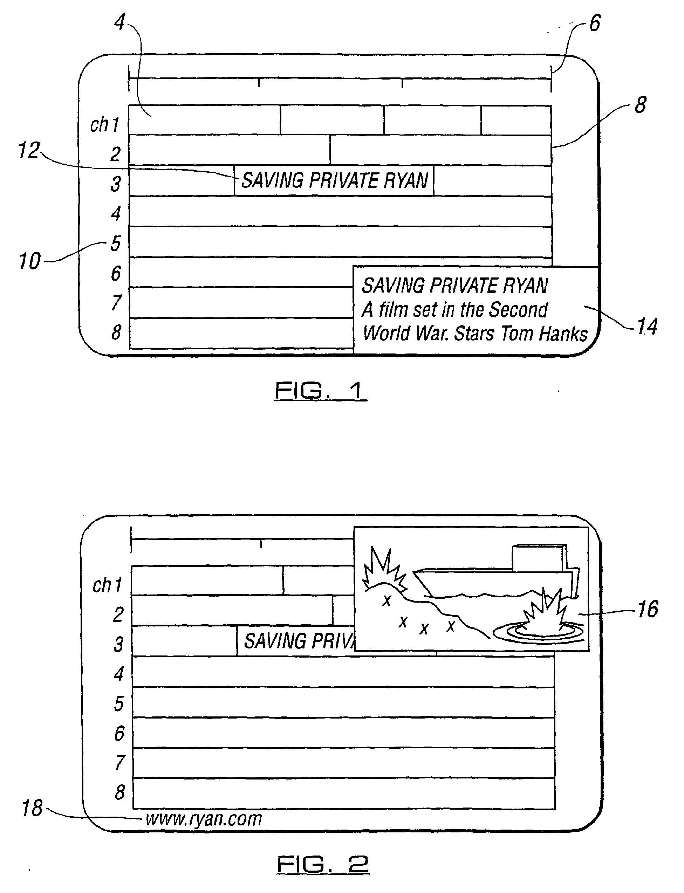

With reference to Figure 1 there is illustrated a conventional electronic programme guide including a grid display 2 and this grid serves to display a number of cells 4, each of which represent a programme which is available for viewing and the length of the cell, with reference to the time bar 6, indicates the length of the programme. The position of the cell in regard to the rows 8 indicates the particular channel with respect to the channel list 10. A user can move a cursor, typically highlighting a particular cell 12 in which the same is positioned by using a remote control device which is not shown. When the cursor is on a particular programme which may be of interest to the user, they can select either to view the programme if it is available for viewing at that time and/or select to obtain information on the same, typically by pressing the button marked "I" on the remote control device.

In this example, the user has placed a cursor on a television programme entitled the film "Saving Private Ryan" and they have selected to obtain information on the same by depressing the key marked "I" on the remote control device. In a conventional manner this causes a display window 14 to be generated with a textual summary of the film. It will be appreciated from a review of the text that while the general subject matter can be provided, it is not possible from this information for the viewer to actually reach a decision as to whether or not this film will be of interest to them as there is obviously a large range of films which relate to the similar general subject matter. Thus, the conventional information may be of some use but such use is limited.

In accordance with the present invention and with reference to Figure 2, if the user follows the same process as described in Figure 1 and then depresses the button marked "I" to obtain information on the same programme, then the textual window may or may not be generated, and in this case, for ease of illustration, is not generated, but in any case, a video and audio display is generated in the form of a trailer for the selected programme in which the video and audio scene 16 depicts typically a number of key points of the film. Thus from viewing the clip or trailer for the film which is generated, then the user can be aware of events which may occur throughout the film and hence make up their mind whether indeed the film is of interest to them. It will be appreciated that by viewing the video and/or audio clip, the user will be much more easily able to firstly gain an idea of the subject and secondly decide whether or not they wish to watch the same.

The video and audio clip or trailer can be generated in accordance to the present invention by utilising a storage means which in one embodiment can be in the form of a hard disc drive provided in the broadcast data receiver. The integration and/or connection of high memory capacity hard disc drive to broadcast data receivers allows pre-recorded programme trailers to be provided on demand in accordance with the present invention to allow the user to obtain a better understanding of the programme content and helps the user to decide whether or not they want to watch or record the programme in question. The storage of audio and video data in an MPEG2 compliant system, typically requires 2.5 GBytes of memory space in the storage means per hour. Typical storage means in accordance with the invention already contain many 10's of GBytes of storage capacity. Thus, for a broadcaster to store a 30 second programme trailer for say 200 programmes, within the broadcast data receiver storage means, requires approximately 10 GBytes of broadcast data receiver mass storage space.

It is envisaged that the video and audio data should be transmitted in a single transport stream at around 50Mbps so that a download time of approximately 45 minutes will be required for the downloading of the data which is subsequently to be used to generate the clips or trailers. It is envisaged that in one embodiment a daily download can take place at off-peak times such as in the middle of the night and then cached directly in the storage means with appropriate identification means for each portion of the data which relates to a specific trailer or clip.

In one embodiment, the memory required can be significantly reduced by transmitting lower resolution video images and displaying these in the reduced screen area instead of over full screen display with this reduced screen area display of the clip or trailer being overlaid onto the EPG.

Thus, upon the user selecting a particular programme from the EPG and then depressing the button marked "I", the broadcast data receiver refers to the storage means and to the portions of video and/or audio data which have been downloaded into the same. The broadcast data receiver identifies the identification means for the selected programme and then searches for the appropriate identification means for a portion of data in the storage means which matches. When found, a portion of data can be processed to cause video and/or audio to be generated on screen and via speakers to generate the clip or trailer for that particular programme.

Also shown in figure 2 is additional information which can be displayed 18, typically via icons which are generated and which may include, for example, a web page address or indeed access into a web site which is of relevance to the particular programme and/or further information on acts which may appear in the programme and it is envisaged for programmes such as films and the like, that further information will be more likely to be available.

## Claims

1. A television system, said system comprising a broadcast data receiver for receiving data which is broadcast from a remote location and which includes video, audio and auxiliary data, processing said data to generate video, audio and auxiliary services via an on-screen display and speakers connected with the broadcast data receiver and, from said auxiliary data, an electronic programme guide (EPG) can be generated on screen to provide information and facilitate user selection of programmes for viewing at that instant or in the future and **characterised in that** there is provided a memory means in which video and/or audio data can be stored for subsequent retrieval and display upon the selection of a programme from the electronic programme guide and to which a portion of said stored video and/or audio data relates.

2. A television system according to claim 1 **characterised in that** the retrieval and display of the video and/or audio data from the storage means is in response to a user request for further information with respect to a particular programme displayed on the EPG.

3. A television system according to claim 1 **characterised in that** a video and/or audio clip or trailer for the particular programme is generated from the data retrieved from storage and shown to the user.

4. A television system according to claim 4 **characterised in that** the user has the option, after or during viewing the clip or trailer to select the programme automatically or in the future via the EPG.

5. A television system according to claim 1 **characterised in that** the storage means is in the form of a hard disc memory provided as part of the broadcast data receiver.

6. A television system according to claim 1 **characterised in that** the video and/or audio data used to generate the clips or trailers in accordance with the invention, is downloaded at designated time intervals and stored.

7. A television system according to claim 6 **characterised in that** the downloading of the data occurs when the broadcast data receiver is less likely to be in use for other functions.

8. A television system according to claim 1 **characterised in that** the includes identification data so that upon the user requesting information for a particular programme the appropriate portion of the data in the storage means can be identified and retrieved for processing by the broadcast data receiver.

9. A television system according to claim 1 **characterised in that** the video data which is transmitted for the generation of clips and trailers is of a lower resolution than that used for the generation of television programmes.

10. A television system according to claim 1 **characterised in that** the data video data which is transmitted for the generation of the clips and trailers is shown in a portion of the display screen.

11. A television system according to claim 1 **characterised in that** further auxiliary information is generated via the data stored in the storage means for retrieval upon the selection of a related programme via the EPG.
